# EUROPEAN PATENT SPECIFICATION

(11) **EP 3 898 508 B1**
(45) Date of publication and mention of the grant of the patent: **30.08.2023**
(21) Application number: 19818142.2
(22) Date of filing: 17.12.2019
(51) Int. Cl.: C01B 25/222, C05B 11/08, C05C 9/00

(54) **PROCESS FOR RECOVERING PHOSPHORUS**
VERFAHREN ZUR RÜCKGEWINNUNG VON PHOSPHOR
PROCÉDÉ DE RÉCUPÉRATION DE PHOSPHORE

(30) Priority: 21.12.2018 IT 201800020950
(43) Date of publication of application: 27.10.2021
(73) Proprietor: Vomm Impianti e Processi S.P.A., 20089 Rozzano (IT)
(72) Inventor: VEZZANI, Massimo, 20089 Rozzano (MI) (IT)
(74) Representative: Botti & Ferrari S.p.A.
(86) International application number: PCT/EP2019/085681
(87) International publication number: WO 2020/127286

(56) References cited:
- EP-A2- 2 774 907
- JP-A- 2011 246 287
- JP-A- 2012 096 972
- FRANZ M ED - MATSUTO TOSHIHIKO ET AL: "Phosphate fertilizer from sewage sludge ash (SSA)", WASTE MANAGEMENT, vol. 28, no. 10, 4 October 2007 (2007-10-04), pages 1809-1818, XP029237388, ISSN: 0956-053X, DOI: 10.1016/J.WASMAN.2007.08.011

## Description

### Field of application

The present invention relates to a process for recovering phosphorus from ashes, preferably bottom ashes, coming from incinerators and/or waste-to-energy plants. In particular, the invention relates to a process comprising a phase of extracting phosphorus from ashes coming from incinerators and/or waste-to-energy plants, using a concentrated solution of sulfuric acid.

### Prior art

Phosphorus is an essential element for the production of fertilizers for use in agriculture.

According to some studies, due to the global population increase, the worldwide production of phosphorus-based fertilizers will peak within the next decades.

However, even should the peak come in the following years, rock phosphates will become increasingly scarce and their prices will rise, albeit low in recent years due to the slowdown in global growth.

The skilled person is well aware that phosphorus does not exist in native state in nature but is present in the earth's crust in the form of minerals, solidly accumulated inside large deposits of phosphate rocks, generally consisting of apatite minerals (fluoroapatites, hydroxyapatites, carbonate apatites) .

Almost all of phosphorus's strategic global mineral reserves are mainly located in three countries, namely in Morocco (including the territory of Western Sahara), the United States and China.

In particular, around 50-70% of the world's phosphate rock reserves are concentrated in Morocco.

Differently, the European Union member states are absolutely poor in phosphate rocks deposits.

As for the production process, these phosphorus-containing rocks must first be recovered from the subsoil, usually through wide open-cast mines.

Subsequently, these rocks must be separated from impurities such as sand, clays, carbonate rocks, organic materials and iron oxides: this preparation and purification phase may in turn include numerous sub-phases such as screening, washing, separation by hydrocyclones, calcination, flotation and magnetic separation.

This preparation and purification phase causes the production of sludges comprising such impurities, which, given their low added value, are often accumulated in collection basins near the mine and/or the place where this production process is carried out.

The ore thus recovered must therefore be subjected to a phosphorus extraction step, often in the form of phosphoric acid.

Generally, two methods may be used for this extraction step: the first method is of the hydrothermal type by reaction with a strong acid such as sulfuric acid or nitric acid, the second one is carried out inside an electric furnace by reducing it by means of coke and silicon oxide.

Both extraction methods are relatively laborious and involve a considerable use of material and energy resources, as well as very large systems and spaces.

More generally, the phosphorus production process from phosphate rocks has a considerable environmental impact, both in consideration of the place where these rocks are taken from the earth's crust, and in relation to the costs and by-products of the preparation and extraction phases.

Therefore, both for reasons of availability of resources, in particular with reference to the concentration of raw material reserves, and for environmental reasons, in particular with reference to the phosphorus production process from phosphate rocks, the need to identify an alternative source for the supply of phosphorus suitable for the production of fertilizers for agricultural use and/or an improved process for the production hereof is very felt.

JP2012096972 A discloses a method for recovering inorganic phosphorus from incinerated ash of livestock feces, including a step where sulfuric acid is added to said ashes to adjust a pH to ≤ 1.8 and phosphorus is eluted; a following step where calcium chloride is added to the resulting phosphorus eluate; and a final step where calcium hydroxide is added to resulting sulfuric acid-freed liquid to adjust a pH to ≥4.0 and phosphorus is recovered as an inorganic phosphorus compound composed mainly of apatite or the like.

However, apatite minerals are known to have very low solubility in both neutral, basic solution and even in slightly acid solution.

Moreover, it is known that apatite minerals can undergo metal sorption phenomena, such as ion exchange, adsorption, complexation and coprecipitation, in particular of heavy metal cations such as lead and cadmium cations.

Thus, the method according to JP'972 does not provide for a product which is always suitable for agricultural purposes, in particular as a fertilizer in drip fertigation.

In conclusion, in light of the state of the art and of the above mentioned drawbacks, the problem underlying the present invention is to provide a process for the production of phosphorus in the form of a chemical species that is directly usable for the production of fertilizers for agricultural use, in particular as fertilizer in drip fertigation, which can be carried out more effectively from an industrial point of view (less laborious in terms of complexity of steps and/or energy intensity) with respect to the procedures according to the prior art and which provides for the use of a phosphorus source that is alternative to the known phosphorus mineral sources, hopefully a renewable and easily available raw material.

### Summary of the invention

The above problem has been solved by providing a process for recovering phosphorus from ashes, preferably bottom ashes, coming from combustion plants that are fed with renewables and/or waste materials as solid fuel, comprising the phases of:
a) mixing ashes comprising phosphorus with a sulfuric acid solution, thereby obtaining an acidic slurry comprising phosphoric acid and having a pH with a pH value comprised between 0 and 2, preferably equal to about 1;
b) mixing said acidic slurry with urea or an aqueous solution thereof until an enriched acidic slurry with a pH value comprised between 2 and 4, preferably equal to about 2.5, is obtained, wherein the enriched acidic slurry thus obtained comprises a solid dispersed phase and a liquid dispersing phase, said liquid dispersing phase comprising a phosphoric acid-urea adduct;
c) separating said liquid dispersing phase from said solid dispersed phase, thereby making the liquid dispersing phase available.

According to the present invention the phrase "ashes coming from combustion plants that are fed with renewables and/or waste materials as solid fuel" means ashes generated by the combustion of solid material, in which the latter is coming from renewable sources or assimilable industrial waste or solid waste or assimilable industrial waste.

Preferably, according to the present process, the aforementioned ashes come from combustion plants that are fed with solid fuel, wherein the latter is selected from the group consisting of urban or industrial solid waste, vegetal biomass, sewage sludges and any combination of the preceding elements.

In particular, such solid material coming from renewable sources or assimilable industrial waste may include wood chips, leaves, twigs, wood waste from the wood industry, wood waste from the paper industry, chipboard, cellulose agricultural organic waste, for instance parts of plants, leaves, stems, flowers and/or fruits of agricultural waste such as cereal kernels, wheat straw, rice husk or sugar cane plants.

Said solid waste or assimilable industrial waste may be undifferentiated urban solid waste, non-differentiable urban solid waste, sewage sludges or a combination thereof. Said solid urban waste or assimilable industrial waste may also be waste from the recycling waste industrial cycle, such as paper and/or cardboard waste, wood waste from the wood industry.

Preferably, according to the process of the present invention, the aforementioned ashes coming from combustion plants that are fed with renewables and/or waste materials as solid fuel may be heavy ashes, namely ashes of the "bottom ash" type.

In particular, in addition to the high intrinsic phosphorus content, the bottom ashes are classified as special non-hazardous waste, therefore their use is of absolute advantage and practicality.

Normally, the raw bottom ashes (or the residues of such raw bottom ashes), depleted of the coarser metallic fraction, are generally used in the construction field as inert material in the production of aggregates for cement for the construction of road and road foundations or, more commonly, they are simply disposed of in landfills.

Therefore, advantageously, not only does the present invention by itself provide a process for recovering phosphorus that is effective and alternative to the conventional ones with reference to the prior art, but it also provides a substantially renewable phosphorus source and allows obtaining a product with added value from waste materials.

Indeed, the aforementioned ashes, in particular bottom ashes, coming from combustion plants that are fed with solid waste such as incinerators or waste-to-energy plants, contain phosphorus compounds, mainly phosphorus (V) compounds, mostly present in the form of phosphorus oxide (V) and metal phosphates such as aluminum phosphates, sodium and calcium.

Moreover, with reference to the prior art, without collecting and precipitating phosphorus as apatite minerals or the like, the process according to the present invention allows recovering phosphorus by lowering the risk to include in the final product heavy metals coming from the aforementioned ashes, in particular when the latter come from combustion plants that are fed with solid fuel, when such fuel is selected from the group consisting of urban or industrial solid waste or sewage sludges.

Preferably, in phase a) of mixing the aforementioned ashes with a sulfuric acid solution, the sulfuric acid solution has a concentration of sulfuric acid comprised between 20-60% by weight, more preferably said solution has a concentration of sulfuric acid comprised between 25-45% by weight, even more preferably between 30-40% by weight.

Preferably, according to the process of the present invention, phase a) of mixing such ashes with a sulfuric acid solution and/or phase b) of mixing said acidic slurry with urea are carried out at a temperature comprised between 40-150°C, more preferably at a temperature comprised between 45-60°C.

Advantageously, when phase a) of mixing said ashes with a sulfuric acid solution is carried out by heating said ashes and said sulfuric acid solution, the reaction between the phosphorus compounds included in the bottom ashes and sulfuric acid may also occur in the presence of a more diluted sulfuric acid solution.

Absolutely advantageously, under mild heating conditions, which is in itself not particularly burdensome in terms of overall operating costs of the system in which this process is carried out, the possibility of carrying out said reaction between phosphorus compounds included in the ashes and sulfuric acid in the presence of a lower acid concentration implies numerous advantages.

First of all, the decrease in the acidity of the sulfuric acid solution implies an advantage in terms of the manufacturing costs of all of the equipment present in the system where the process according to the present invention may be carried out.

Indeed, it is self-evident that the handling and containment of highly acidic solutions require the provision of systems, units and equipment which, following the contact with acid solutions that is continuous and prolonged over time, do not undergo wear too quickly due to the corrosion of the metal parts which they are built with.

Furthermore, the use of a more diluted sulfuric acid solution allows savings in the purchase of the reagents necessary for carrying out the process.

Preferably, in the aforementioned phase b) of mixing acidic slurry with urea, the urea aqueous solution is in the form of a thick solution with a concentration comprised between 20 and 90% by weight, more preferably between 40 and 80% by weight.

According to the present invention the phrase "thick solution" means a high-viscosity solution such high-viscosity being caused by the high concentration of solute (urea).

According to a preferred embodiment of the present process, phase a) of mixing ashes with a sulfuric acid solution may comprise in turn the following steps:
- providing a turbo-reactor comprising a cylindrical tubular body having at least one inlet opening and at least one discharge opening, optionally a heating jacket for bringing the temperature of the tubular body to a predetermined temperature value, and a rotor, disposed in the cylindrical tubular body and comprising a shaft provided with elements radially projecting therefrom;
- supplying a continuous flow of the aforementioned ashes and a continuous flow of an aqueous solution of sulfuric acid into said turbo-reactor, thereby dispersing, by the action of said rotor, said ashes into a continuous flow of particles and the aqueous solution of sulfuric acid into a continuous flow of fine droplets;
- centrifuging said ashes and the sulfuric acid solution against the inner wall of said turbo-reactor, said rotor being rotated at a speed greater than or equal to 100 rpm, with formation of a dynamic, tubular, thin, highly turbulent fluid layer, in which the particles of the ashes and the droplets of sulfuric acid aqueous solution are mechanically kept in intimate contact by the radially projecting elements of the rotor, while the particles and the droplets advance in substantial contact with the inner wall of the turbo-reactor towards the discharge opening, thereby obtaining an acidic slurry comprising phosphoric acid, having a pH with a value between 0 and 2, preferably equal to 1; and,
- discharging a continuous flow of acidic slurry comprising phosphoric acid from said discharge opening.

In a mostly preferred manner, the aforementioned rotor of the aforementioned turbo-reactor may be rotated at a speed greater than or equal to 300 rpm, more preferably greater than or equal to 800 rpm.

Preferably, both carrying out mixing phase a) through the aid of a turbo-reactor, and carrying out phase a) in a fully conventional reactor, phase b) of mixing the acidic slurry with urea may in turn comprise the following steps:
- providing a turbo-mixer comprising a cylindrical tubular body having at least one inlet opening and at least one discharge opening, optionally a heating jacket for bringing the temperature of the cylindrical tubular body to a predetermined temperature value, and a rotor, disposed in the cylindrical tubular body and comprising a shaft provided with elements radially projecting therefrom;
- supplying a continuous flow of the aforementioned acidic slurry, together with a continuous flow of urea, into the aforementioned turbo-mixer, the acidic slurry being dispersed by the rotor into a flow of fine droplets;
- centrifuging urea and said acidic slurry against the inner wall of the turbo-mixer, the rotor of which being rotated at a speed greater than or equal to 100 rpm, with formation of a dynamic, tubular, thin, highly turbulent fluid layer, in which urea and the droplets of acidic slurry are mechanically kept in intimate contact by the radially projecting elements of the rotor, while they advance in substantial contact with the inner wall of the turbo-mixer towards the discharge opening, thereby obtaining a continuous flow of an enriched acidic slurry with a pH value comprised between 2 and 4, preferably equal to about 2.5, in which the enriched acidic slurry comprises a solid dispersed phase and a liquid dispersing phase, wherein said liquid dispersing phase comprises a phosphoric acid-urea adduct; and,
- discharging a continuous flow of enriched acidic slurry from the discharge opening.

In a mostly preferred manner, the rotor of the aforementioned turbo-mixer may be rotated at a speed greater than or equal to 300 rpm, more preferably greater than or equal to 600 rpm.

Alternatively, according to a further embodiment, phase a) and phase b) of the process according to the present invention may be carried out in a single reaction and mixing unit for the production of a phosphoric acid-urea adduct from said ashes, preferably bottom ashes, coming from combustion plants that are fed with renewables and/or waste materials as solid fuel, wherein phase a) of mixing ashes with a sulfuric acid solution comprises in turn the following steps:
- providing a reactor comprising a cylindrical tubular body with a horizontal axis, having a first opening and a second opening for inletting reagents, disposed in proximity of a first end of the cylindrical tubular body, a third opening for inletting reagents, disposed in a position that is interposed between said first end of the cylindrical tubular body and a second opposite end of the cylindrical tubular body, at least one opening for discharging the final product, an optional heating or cooling jacket for bringing the temperature of the tubular body to a predetermined temperature value, and a rotor, disposed in the cylindrical tubular body and in turn comprising a shaft provided with elements radially projecting therefrom;
- supplying a continuous flow of the aforementioned ashes into the aforementioned reactor, through said first inlet opening, and a continuous flow of an aqueous solution of sulfuric acid, through said second inlet opening, thereby dispersing, by the action of said rotor, said ashes into a continuous flow of particles and the aqueous solution of sulfuric acid into a continuous flow of fine droplets;
- centrifuging said ashes and the aqueous solution of sulfuric acid against the inner wall of the reactor, said rotor being rotated at a speed greater than or equal to 100 rpm, with formation of a dynamic, tubular, thin, highly turbulent, fluid layer, in which the particles of the ashes and the droplets of aqueous solution of sulfuric acid are mechanically kept in intimate contact by the radially projecting elements of the rotor, while they advance in substantial contact with the inner wall of the reactor towards the discharge opening, thereby obtaining a continuous flow of acidic slurry comprising phosphoric acid, having a pH with a pH value between 0 and 2, preferably equal to 1;
and wherein the aforementioned phase b) of mixing acidic slurry with urea comprises the following steps:
- supplying a continuous flow of urea into the same reactor, through the aforementioned third inlet opening and centrifuging the latter together with the continuous flow of acidic slurry, by the action of said radially projecting elements of the rotor, by advancing them in substantial contact with the inner wall of the reactor towards the discharge opening, thereby obtaining a flow of enriched acidic slurry with a pH value comprised between 2 and 4, preferably equal to about 2.5, in which said enriched acidic slurry comprises a solid dispersed phase and a liquid dispersing phase, wherein the liquid dispersing phase comprises a phosphoric acid-urea adduct;
- discharging a continuous flow of enriched acidic slurry from the aforementioned discharge opening.

In a mostly preferred manner, the rotor of the aforementioned reactor may be rotated at a speed greater than or equal to 300 rpm, more preferably greater than or equal to 800 rpm, during phase a), and at a speed greater than or equal to 300 rpm, more preferably greater than or equal to 600 rpm, during phase b) of the present process.

Preferably, when said phase a) of mixing said ashes with a sulfuric acid solution is carried out by heating said bottom ashes and said sulfuric acid solution, a heat-transfer fluid flows inside the heating jacket of said turbo-reactor or of the reactor described in the previous paragraphs, more preferably said heat-transfer fluid consists of water, a mixture of molten salts or diathermic oil.

Advantageously, when carried out by means of a turbo-reactor or of a reactor as described in the previous paragraphs, phase a) of mixing may be preferably carried out for a time between 60 seconds and 600 seconds, more preferably for a time between 120 seconds and 150 seconds.

Analogously, when said phase b) of mixing acidic slurry with urea is carried out by heating, a heat-transfer fluid flows inside the heating jacket of said turbo-mixer or of the reactor described in the previous paragraphs, more preferably said heat-transfer fluid consists of water, a mixture of molten salts or diathermic oil.

Equally advantageously, when carried out by means of a turbo-mixer or a reactor as described in the previous paragraphs, phase b) of mixing the acidic slurry with urea may preferably be carried out for a time between 30 seconds and 300 seconds, more preferably for a time between 45 seconds and 120 seconds.

According to a further embodiment, the aforementioned phase c) is carried out in a separation unit, in which the separation of the dispersing phase comprising phosphoric acid-urea adduct from the dispersed phase is carried out by centrifugation, filtration or decantation.

Mostly advantageously, as it will be seen in the following detailed description, when phase a) and/or phase b) are carried out by means of the aforementioned turbo-reactor and of the aforementioned turbo-mixer, respectively, as well as when said phases a) and b) of the present process are carried out within a unique reactor as described in the previous paragraphs, during phase a) the reaction between the aforementioned phosphorus compounds and the sulphuric acid ensures particularly high yields of phosphoric acid and during phase b) the formation reaction of the phosphoric acid-urea adduct is extremely effective, thus ensuring particularly high yields of the latter product.

In particular, generally, the process according to the present invention allows obtaining a final product, namely said liquid dispersing phase comprising said phosphoric acid-urea adduct, which is absolutely useful for use in the agricultural context.

In particular, said liquid dispersing phase comprising a phosphoric acid-urea adduct may be used as crop fertilizer, especially as a fertilizer for crops with drip fertigation.

Indeed, said liquid dispersing phase comprising said phosphoric acid-urea adduct (normally in the form of a solution) may be supplied to drip fertigation systems.

In particular, due to its acidic nature, the liquid dispersing phase is particularly suitable for the prevention and/or removal of limestone deposits that are normally formed inside the ducts, in the valves and at the dispensing nozzles of said irrigation systems.

According to another aspect, the aforementioned technical problem is also solved by a system for carrying out the aforementioned process for recovering phosphorus from ashes coming from combustion plants which are fed with renewables and/or waste materials as solid fuel according to the present invention, comprising the following units:
- a turbo-reactor comprising a cylindrical tubular body having at least one inlet opening for a continuous flow of ashes coming from combustion plants which are fed with a solid fuel in the form of renewables and/or waste materials and at least one discharge opening for discharging a continuous flow of acidic slurry, preferably a heating jacket for bringing the inner wall of the tubular body to a predetermined temperature value, and a rotor, disposed in the cylindrical tubular body and comprising a shaft provided with elements radially projecting therefrom; and,
- a turbo-mixer comprising a cylindrical tubular body having at least one inlet opening for a flow of acidic slurry and for a flow of urea and at least one discharge opening for discharging an enriched acidic slurry, preferably a heating jacket for bringing the inner wall of the tubular body to a predetermined temperature value, and a rotor, arranged in the cylindrical tubular body and comprising a shaft having elements projecting radially therefrom.

Alternatively, according to a different embodiment, it is provided a system for carrying out the aforementioned process for recovering phosphorus from ashes coming from combustion plants that are fed with renewables and/or waste materials as solid fuel according to the present invention, comprising a reactor comprising in turn a cylindrical tubular body with a horizontal axis, having a first opening and a second opening for inletting reagents, arranged in proximity of a first end of said cylindrical tubular body, a third opening also for inletting reagents, arranged in a position interposed between said first end of the cylindrical tubular body and an opposite second end of the cylindrical tubular body, at least one opening for discharging the final product, such as an enriched acidic slurry, preferably a heating jacket for bringing the inner wall of the tubular body to a predetermined temperature value, and a rotor, disposed in the cylindrical tubular body and comprising a shaft having elements projecting radially therefrom.

Preferably, the above elements radially projecting from the shaft of the rotor of said turbo-reactor and/or of said turbo-mixer, or of the reactor as described in the preceding paragraph, may be for instance rod-shaped or in the form of blades or plowshares or reels.

In an equally preferred manner, the turbo-reactor and/or the turbo-mixer, as well as the reactor described just above, may be made of stainless steel, more preferably of stainless steel with acidic resistance characteristics.

According to the present invention the phrase "stainless steel" means a steel alloy comprising carbon in a percentage less than or equal to 1.2% by weight and chromium in an amount equal to or greater than 10.5% by weight.

Generally, such steel alloy includes further elements for increasing corrosion resistance, such as nickel and molybdenum.

Finally, in a mostly preferred manner, the system according to the present invention may further comprise a separation unit capable of operating in continuous or discontinuous, having at least one inlet opening for a flow of enriched acidic slurry, wherein said enriched acidic slurry comprises a dispersed phase and a dispersing phase, and at least one discharge opening for discharging a continuous or discontinuous flow of the dispersing phase (once separated from the dispersed phase).

In an equally preferred manner, the turbo-reactor and/or the turbo-mixer and/or the aforementioned reactor may be internally covered by a protective layer of a highly acid-resistant material.

Advantageously, according to the latter embodiment, it is possible to make the units of the system of any metal alloy suitable for the purpose, both in terms of the manufacturing process of the units and of the appropriate mechanical strength properties, and to protect from the attack of the acids just those parts and elements of these units directly involved in the exposure with the concerned acid mixtures.

The advantages and characteristics typical of this invention will become clearer from the following detailed description provided by way of nonlimiting illustration of preferred embodiments of the present invention, with reference to the equipment schematically shown in the enclosed figures.

### Detailed description of a preferred embodiment

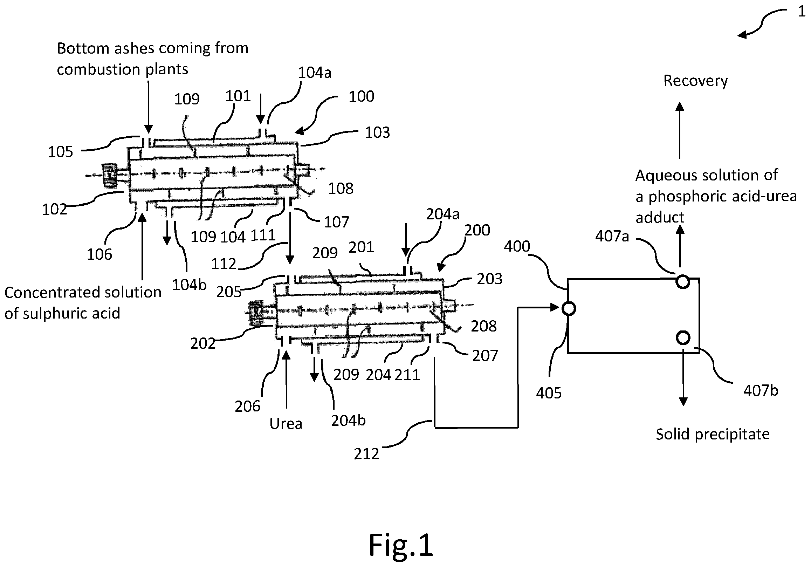

With reference to Figure 1, a system 1 used for the process according to the invention, comprising a turbo-reactor 100 and a turbo-mixer 200, is shown.

The turbo-reactor 100 comprises in turn a tubular cylindrical body 101, closed at the opposite ends by bottoms 102 and 103, and coaxially provided with a heating jacket 104 intended to be crossed by a heat-transfer fluid, for instance diathermic oil, for keeping the inner wall of the tubular cylindrical body 101 at a predefined temperature.

Said heating jacket 104 has an inlet opening 104a and a discharge opening 104b, generally arranged for inletting the heated heat-transfer fluid and for outletting the cooled heat-transfer fluid, respectively.

The direction of the arrows drawn at the openings 104 and 104b exemplifies the direction of said incoming flow of heat-transfer fluid and of said outgoing flow of heat-transfer fluid, respectively.

The tubular body 101 is provided with inletting openings 105 and 106 for a continuous flow of ashes, optionally bottom ashes, coming from combustion plants, and for a continuous flow of a concentrated sulfuric acid solution, respectively, as well as with a discharge opening 107.

The tubular body 101 rotatably supports therein a rotor comprising a shaft 108 provided with radially projecting elements 109 in the form of blades, said blades 109 being arranged helicoidally and oriented for centrifuging and simultaneously conveying a flow of an acidic slurry resulting from the mixing of the aforementioned two flows to the discharge opening 107. The acidic slurry comprises phosphoric acid extracted from the aforementioned ashes, optionally bottom ashes, and comprises ashes depleted of their intrinsic phosphorus content.

The direction of the arrows drawn at the openings 105, 106 and 107 exemplifies the direction of said incoming reagent flows and said outgoing acidic slurry flow, respectively.

In particular, when said continuous flow of ashes coming from combustion plants and said continuous flow of sulfuric acid solution enter the turbo-reactor 100 and there are finely mixed in an acidic slurry, the latter is centrifuged by the blades 109 of the rotor against the inner wall of the cylindrical tubular body 101, which may be heated by means of the heating jacket 104.

Said turbo-reactor 100 is thus suitably arranged to carry out phase a) of mixing ashes with a sulfuric acid solution.

In particular, the intense mechanical action exerted by the rotor of the turbo-reactor 100 is such that a significant amount of kinetic energy is transmitted to the substrate, namely to said bottom ashes and to said sulfuric acid solution: the continuous transmission of energy to the substrate causes an intimate interaction between said ashes, finely divided into particles of ash, and the droplets of sulfuric acid solution.

Said intimate interaction allows a complete extraction of the phosphorus content in said bottom ashes with transformation of the phosphorus oxides (V) and of the metal phosphates contained in said agglomerates of bottom ashes into phosphoric acid.

The phosphoric acid thus obtained is normally in its various dissociative forms, i.e. orthophosphoric acid, pyrophosphoric acid and metaphosphoric acid. Moreover, further to the interaction between sulfuric acid and the above phosphorus compounds (V), sulfate is released into the acidic slurry.

In particular, advantageously, said intimate interaction occurs inside a layer of acidic, dynamic, thin, tubular slurry flowing inside the turbo-reactor 101 from said bottom 102 to said bottom 103, in proximity of which the discharging opening 107 is located.

As a consequence, being phase a) carried out by means of a turbo-reactor 100, the process according to the present invention is undoubtedly effective and absolutely practicable in the context of a continuous industrial application.

A motor, not shown, is suitably provided for operating the bladed rotor at variable speeds, which may be equal to or greater than 100 rpm.

Said discharge opening 107 is in fluid communication with a discharge duct 112 into which a continuous flow of acidic slurry exiting from the tubular body 101 is conveyed.

Once out of said turbo-reactor 100, said flow of acidic slurry is supplied in continuous to the turbo-mixer 200 through the inlet opening 205.

The turbo-mixer 200 comprises in turn a tubular cylindrical body 201, closed at the opposite ends by bottoms 202 and 203, and coaxially provided with a heating jacket 204 intended to be crossed by a heat-transfer fluid, for instance a diathermic oil, for keeping the inner wall of the tubular cylindrical body 201 at a predefined temperature.

Said heating jacket 204 has an inlet opening 204a and a discharge opening 204b, generally arranged for inletting the heated heat-transfer fluid and for outletting the cooled heat-transfer fluid, respectively.

The direction of the arrows drawn at the openings 204a and 204b exemplifies the direction of said incoming flow of heat-transfer fluid and said outgoing flow of heat-transfer fluid, respectively.

The tubular body 201 is provided with inletting openings 205 and 206 for a continuous flow of said acidic slurry and for a continuous flow of urea, for instance solid urea or urea in aqueous solution, respectively, and with a discharge opening 207.

The tubular body 201 rotatably supports therein a rotor comprising a shaft 208 provided with radially projecting elements 209 in the form of blades, said blades 209 being arranged helicoidally and oriented for centrifuging and simultaneously conveying a flow of an enriched acidic slurry resulting from the mixing of the above two flows towards the discharge opening 207, wherein said enriched acidic slurry comprises an adduct of phosphoric acid and urea.

The direction of the arrows drawn at the openings 205, 206 and 207 exemplifies the direction of said incoming flows of acidic slurry and urea and said outgoing flow of enriched acidic slurry, respectively.

In particular, when said continuous flow of acidic slurry and said continuous flow of urea enter the turbo-mixer 200, they are centrifuged by the blades 209 of the rotor against the inner wall of the cylindrical tubular body 201, which may be heated by means of the heating jacket 204.

The turbo-mixer 200 is thus arranged for carrying out said phase b) of mixing acidic slurry with urea.

In particular, the intense mechanical action exerted by the rotor of the turbo-mixer 200 is such that a significant amount of kinetic energy is transmitted to the substrate, i.e. to the acidic slurry and urea, either solid or in aqueous solution: the continuous transmission of energy to the substrate causes an intimate interaction between the droplets of said acidic slurry containing phosphoric acid and urea, finely divided into solid particles or droplets, in case of solid urea or an urea aqueous solution, respectively.

Said intimate interaction allows an almost complete coupling between the phosphoric acid molecules and the urea molecules with formation of phosphoric acid-urea adducts.

Specifically, the phosphoric acid, whatever its dissociative form, has marked Lewis acid characteristics and, for this reason, it has great affinity with the urea molecule, having a high-energy occupied orbital that is well willing to share its own electronic pair with an acid molecule, forming said phosphoric acid-urea adduct (LUMO-HOMO interaction).

Advantageously, said intimate interaction occurs inside a layer of enriched acidic, dynamic, thin, tubular slurry flowing inside the turbo-mixer 201 from said bottom 202 to said bottom 203, in proximity of which the discharge opening 207 is located.

As a consequence, being said phase b) carried out by means of a turbo-mixer 200, the process according to the present invention is undoubtedly effective and absolutely practicable in the context of a continuous industrial application.

A motor, not shown, is provided for operating the bladed rotor of the turbo-mixer 200 at variable speeds, which may be equal to or greater than 100 rpm.

Said discharge opening 207 is in fluid communication with a discharge duct 212 into which a continuous flow of enriched acidic slurry exiting from the tubular body 201 is conveyed.

Once out of the turbo-mixer 200, the flow of enriched acidic slurry is fed in continuous to the separation unit 400, into which it is introduced through an inletting opening 405.

Inside the separation unit 400, the dispersing phase of the enriched acidic slurry is suitably separated from the dispersed phase of the same enriched acidic slurry.

Said separation unit may be a completely traditional container, suitable for instance for centrifuging said enriched acidic slurry.

Specifically, inside said separation unit 400, the aqueous solution comprising said phosphoric acid-urea adduct (dispersing phase) is easily separated from the residues of said bottom ashes depleted of phosphorus, as well as from metal sulphates (dispersed phase), which suitably formed during phase a) by interaction of the sulfuric acid with the aforementioned metal phosphates (mainly bivalent metal phosphates, for instance calcium phosphates).

In particular, among these metal sulphates, calcium sulphate and its hydrated forms prevail, which have a natural tendency to precipitate in aqueous solution, even under low pH conditions.

Said continuous flow of enriched acidic slurry may be cooled at the inlet of said separation unit, for instance by contact with the walls of the separation unit itself, which may be cooled by means of a cooling jacket crossed by a cooling fluid, said cooling jacket not being represented since it is completely conventional.

At the exit from said separation unit 400, through a discharge opening 407a, a flow of said liquid dispersing phase, namely of an aqueous solution of phosphoric acid-urea adduct, is discharged, which is recovered to be advantageously re-used as fertilizer in the agricultural context, especially in drip fertigation.

At the exit from said separation unit 400, through a discharge opening 407b, said dispersed phase is also discharged.

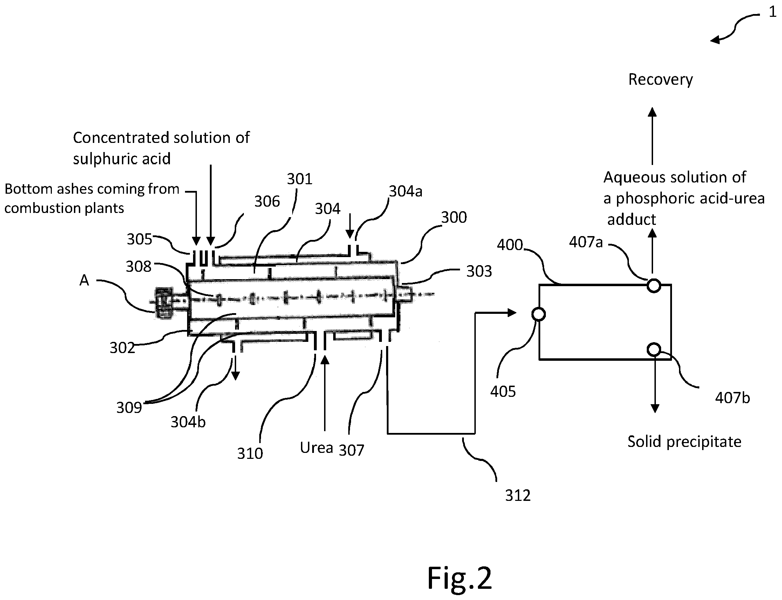

Finally, in Figure 2 a further embodiment of the system 1 is schematically reported, which comprises a unique reactor 300, in which the first phase a) of mixing ashes with a sulfuric acid solution and then phase b) of mixing acidic slurry with urea, as previously described in the summary, may be carried out.

Specifically, the reactor 300 - which actually is a turbo-reactor - comprises in turn a tubular cylindrical body 301 with a horizontal axis (the horizontal axis is exemplified by a dashed line marked with letter A), closed at the opposite ends by bottoms 302 and 303, and coaxially provided with a heating jacket 304 arranged to be crossed by a heat-transfer fluid, for instance diathermic oil, so as to keep the inner wall of the tubular cylindrical body 301 at a predefined temperature.

Said heating jacket 304 has an inlet opening 304a and a discharge opening 304b, generally arranged to inlet the heated heat-transfer fluid and to outlet the cooled heat-transfer fluid, respectively.

The direction of the arrows drawn at the openings 304a and 304b exemplifies the direction of said incoming flow of heat-transfer fluid and of said outgoing flow of heat-transfer fluid, respectively.

The tubular body 301 is provided with a first inlet opening 305 and a second inlet opening 306, for a continuous flow of ashes, optionally bottom ashes, coming from combustion plants, and for a continuous flow of a concentrated sulfuric acid solution, respectively.

The tubular body 301 is also provided with a third inlet opening 310 for a continuous flow of urea, arranged in a position that is interposed between the first end 302 of said cylindrical tubular body and the second opposite end 303 of said cylindrical tubular body, as well as with at least one opening 307 for discharging the final product, such as enriched acidic slurry.

The tubular body 301 rotatably supports therein a rotor comprising a shaft 308 provided with radially projecting elements 309 in the form of blades, said blades 309 being helicoidally arranged and oriented for centrifuging and simultaneously conveying towards the bottom 303 a flow of an acidic slurry resulting from the mixture of said ashes and said aqueous solution of sulfuric acid.

In particular, when said continuous flow of ashes coming from combustion plants and said continuous flow of sulfuric acid solution enter the reactor 300 and are finely mixed therein into an acidic slurry, the latter is centrifuged by the blades 309 of the rotor against the inner wall of the cylindrical tubular body 301, which may be heated by means of the heating jacket 304.

Said reactor 300 is thus suitably arranged for carrying out phase a) of mixing ashes with a sulfuric acid solution.

In particular, the intense mechanical action of the rotor of the reactor 300 is capable of exerting on the substrate an intense mechanical action, as previously described in connection with the turbo-reactor 100.

Along the fluid path towards the bottom 303, the acidic slurry encounters a flow of urea that is supplied into the cylindrical tubular body 301 through the third inlet opening 310.

In particular, as soon as it enters the cylindrical tubular body, the flow of urea undergoes an intense mechanical action exerted by the rotor of the reactor 300, then said continuous flow of acidic slurry and said continuous flow of urea are centrifuged together by the blades 309 of the rotor against the inner wall of the cylindrical tubular body 301.

The blades 309 are also helicoidally arranged and oriented to centrifuge and simultaneously convey a flow of an enriched acidic slurry resulting from the mixture of the above two flows of acidic slurry and urea towards the discharge opening 307, where said enriched acidic slurry comprises an adduct of phosphoric acid and urea.

Said flows intimately interact inside a layer of enriched acidic slurry, as previously described in connection with the turbo-mixer 200.

The reactor 300 is thus arranged for carrying out said phase b) of mixing acidic slurry with urea.

Even when phase a) and phase b) are carried out by means of a reactor 300, the process according to the present invention is undoubtedly effective and absolutely practicable in the context of a continuous industrial application.

A motor, not shown, is provided for operating the bladed rotor of the reactor 300 at variable speeds, which may be equal to or greater than 100 rpm.

Said discharge opening 307 is in fluid communication with a discharge duct 312 into which a continuous flow of enriched acidic slurry exiting from the tubular body 301 is conveyed.

Once out of the reactor 300, the flow of enriched acidic slurry is supplied in continuous to the separation unit 400, into which it is introduced through an inlet opening 405.

Analogously to what has been previously described, inside the separation unit 400 the enriched acidic slurry is separated into a dispersed phase and into a dispersing phase, the latter comprising a phosphoric acid-urea adduct, entailing all the advantages already described above.

### EXAMPLE 1

A flow of bottom ashes generated by the combustion of urban solid wastes inside a waste-to-energy plant was fed in continuous (150 kg/h), through the opening 105, into the turbo-reactor 100, wherein the bladed rotor 108 was rotated at a speed of 1000 rpm.

Simultaneously, a flow of aqueous solution of sulfuric acid at 30% w/w was fed in continuous (200 kg/h) through the opening 106.

Immediately at the inlet of the turbo-reactor 100, the flow of bottom ashes was finely mechanically divided into fine agglomerates which were immediately centrifuged.

Simultaneously, the aqueous solution of sulfuric acid, fed through the opening 106, was centrifuged by the blades of the rotor 108 in order to intimately mix it with the above flow of bottom ashes, thus forming a flow of acidic slurry.

Said flow of acidic slurry was immediately centrifuged against the inner wall of the reactor, where a layer of dynamic, tubular and thin fluid was formed.

Inside the turbo-reactor 100, the wall temperature was kept at a value of about 55°C, while the rotational speed of the bladed rotor 108 was constantly kept at 1000 rpm.

After an average residence time of about 120 seconds within the reactor, the acidic slurry with a pH equal to 0.95 and containing phosphoric acid was discharged in continuous from the opening 107.

The acidic slurry thus obtained was fed in continuous into the turbo-mixer 200, through the inlet opening 205 with a flow rate of approximately 120 kg/h, being co-current with a flow of urea aqueous solution with a concentration equal to 50% w/w, fed through the inlet opening 206.

Immediately at the inlet into said turbo-mixer 200, the continuous flow of acidic slurry and the flow of urea aqueous solution were mixed to produce a flow of enriched acidic slurry, right from the beginning, although partially, comprising a phosphoric acid-urea adduct.

Said flow of enriched acidic slurry was centrifuged against the inner wall of the mixer, where a layer of dynamic, tubular and thin flow was formed.

Inside the turbo-mixer 200, the wall temperature was kept at a value of about 45°C, while the rotational speed of the bladed rotor 208 was constantly kept at 800 rpm.

After an average residence time of 45 seconds inside the turbo-mixer 200, a flow of enriched acidic slurry with a pH equal to 2.5 and containing a phosphoric acid-urea adduct was discharged in continuous from the turbo-mixer 200.

Afterwards, said flow of enriched acidic slurry was fed in continuous into the separation unit 400, in this case into a horizontal centrifugal decanter for sludge thickening, with a flow rate of 100 kg/h.

After an average residence time of 5 minutes inside the decanter, said enriched acidic slurry was effectively separated into a solid precipitate containing calcium sulphate, hydrated salts thereof (gypsum) and residues of bottom ashes depleted of phosphorus, and into an aqueous solution of phosphoric acid-urea adduct.

The aqueous solution of phosphoric acid-urea adduct, having a pH equal to 2.5, was discharged in continuous through a discharge opening 407a. The output temperature recorded in said aqueous solution of phosphoric acid-urea adduct was 25°C.

Said aqueous solution of phosphoric acid-urea adduct was then collected and stored to be used as fertilizer.

Meanwhile, said solid precipitate was discharged through a discharge opening 407b and afterwards collected for the disposal thereof.

## Claims

1. A process for recovering phosphorus from ashes, preferably bottom ashes, coming from combustion plants that are fed with renewables and/or waste materials as solid fuel, comprising the phases of:
a) mixing said ashes comprising phosphorus with a sulfuric acid solution, thereby obtaining an acidic slurry comprising phosphoric acid and having a pH value between 0 and 2, preferably equal to about 1;
b) mixing said acidic slurry with urea or an aqueous solution thereof until an enriched acidic slurry with a pH value comprised between 2 and 4, preferably equal to about 2.5, is obtained, wherein said enriched acidic slurry comprises a solid dispersed phase and a liquid dispersing phase, said liquid dispersing phase comprising a phosphoric acid-urea adduct;
c) separating said dispersing liquid phase from said solid dispersed phase, thereby making said liquid dispersing phase available.

2. The process according to claim 1, wherein said ashes come from combustion plants that are fed with a solid fuel selected from the group consisting of urban or industrial solid waste, vegetal biomass, sewage sludges and any combination thereof.

3. The process according to claim 1 or 2, wherein in said phase a) of mixing said ashes with a sulfuric acid solution, the sulfuric acid solution has a sulfuric acid concentration comprised between 20-60% by weight, preferably 25-45% by weight, more preferably 30-40% by weight.

4. The process according to any one of the preceding claims, wherein said phase a) of mixing said ashes with a sulfuric acid solution and/or said phase b) of mixing said acidic slurry with urea are carried out at a temperature comprised between 40-150°C, preferably between 45-60°C.

5. The process according to any one of the preceding claims, wherein in said phase b) of mixing said acidic slurry with urea, said urea aqueous solution is in the form of a thick solution with a concentration comprised between 20% and 90% by weight, preferably between 40% and 80% by weight.

6. The process according to any one of the preceding claims, wherein said phase a) of mixing said ashes with a sulfuric acid solution comprises the following steps:
- providing a turbo-reactor (100) comprising a cylindrical tubular body (101) having at least one inlet opening (105; 106) and at least one discharge opening (107), optionally a heating jacket (104) for bringing the temperature of the tubular body to a predetermined temperature value, and a rotor, arranged in the cylindrical tubular body and comprising a shaft (108) provided with elements (109) radially projecting therefrom;
- supplying a continuous flow of said ashes and a continuous flow of aqueous solution of sulfuric acid into said turbo-reactor (100), thereby dispersing, by means of said rotor, said ashes into a continuous flow of particles and said aqueous solution of sulfuric acid into a continuous flow of fine droplets;
- centrifuging said ashes and the aqueous solution of sulfuric acid against the inner wall of the turbo-reactor (100), said rotor (108) being rotated at a speed equal to or greater than 100 rpm, with formation of a dynamic, tubular, thin, highly turbulent fluid layer, in which the particles of said ashes and the droplets of said aqueous solution of sulfuric acid are mechanically kept in intimate contact by the radially projecting elements (109) of said rotor, while they advance in substantial contact with said inner wall of the turbo-reactor towards the discharge opening (107), thereby obtaining an acidic slurry comprising phosphoric acid, having a pH value between 0 and 2, preferably equal to 1; and,
- discharging a continuous flow of acidic slurry comprising phosphoric acid from said discharge opening (107).

7. The process according to any one of the preceding claims, wherein said phase b) of mixing said acidic slurry with urea comprises the following steps:
- providing a turbo-mixer (200) comprising a cylindrical tubular body (201) having at least one inlet opening (205; 206) and at least one discharge opening (207), optionally a heating jacket (204) for bringing the temperature of said tubular body to a predetermined temperature value, and a rotor, disposed in the cylindrical tubular body and comprising a shaft (208) provided with elements (209) radially projecting therefrom;
- supplying a continuous flow of said acidic slurry together with a continuous flow of urea into said turbo-mixer (200), the acidic slurry being dispersed by said rotor into a flow of fine droplets;
- centrifuging urea and said acidic slurry against the inner wall of said turbo-mixer (200), said rotor (208) being rotated at a speed equal to or greater than 100 rpm, with formation of a dynamic, tubular, thin, highly turbulent fluid layer, in which urea and the acidic slurry droplets are mechanically kept in intimate contact by the radially projecting elements (209) of said rotor, while they advance in substantial contact with said inner wall of the turbo-mixer towards the discharge opening (207), thereby obtaining a continuous flow of an enriched acidic slurry having a pH value comprised between 2 and 4, preferably equal to about 2.5, wherein said enriched acidic slurry comprises a solid dispersed phase and a liquid dispersing phase, said liquid dispersing phase comprising a phosphoric acid-urea adduct;
- discharging a continuous flow of enriched acidic slurry from said discharge opening (207).

8. Process according to any one of claims 1 to 5, wherein
said phase a) of mixing ashes with a sulfuric acid solution comprises the following steps:
- providing a reactor (300) comprising a cylindrical tubular body (301) with a horizontal axis having a first (306) and a second opening (305) for the inlet of reagents, arranged in proximity of a first end of said cylindrical tubular body, a third opening (310) for the inlet of reagents, arranged in a position interposed between said first end of said cylindrical tubular body and a second opposite end of said cylindrical tubular body, at least one opening (307) for discharging the final product, optionally a heating or cooling jacket (304) for bringing the temperature of the tubular body to a predetermined temperature value, and a rotor, disposed in the cylindrical tubular body and comprising a shaft (308) provided with elements (309) radially projecting therefrom;
- supplying a continuous flow of said ashes, through said first inlet opening (306), and a continuous flow of an aqueous solution of sulfuric acid, through said second inlet opening (305), into said reactor (300), thereby dispersing, by means of said rotor, said ashes into a continuous flow of particles and said aqueous solution of sulfuric acid into a continuous flow of fine droplets;
- centrifuging said ashes and the solution of sulfuric acid against the inner wall of the reactor (300), said rotor (308) being rotated at a speed equal to or greater than 100 rpm, with formation of a dynamic, tubular, thin, highly turbulent fluid layer, in which the particles of said ashes and the droplets of said aqueous solution of sulfuric acid are mechanically kept in intimate contact by the radially projecting elements (309) of said rotor, while they advance in substantial contact with said inner wall of the reactor towards the discharge opening (307), thereby obtaining a continuous flow of acidic slurry comprising phosphoric acid, having a pH with a pH value between 0 and 2, preferably equal to 1;
said phase b) of mixing acidic slurry with urea comprises the following steps:
- supplying a continuous flow of urea through said third inlet opening (310) into said turbo-mixer (200), and centrifuging the latter together with said continuous flow of acidic slurry by the action of said radially projecting elements (309) of said rotor (308), by advancing them in substantial contact with said inner wall of the reactor towards the discharge opening, thereby obtaining a flow of enriched acidic slurry having a pH value comprised between 2 and 4, preferably equal to 2.5, wherein said enriched acidic slurry comprises a solid dispersed phase and a liquid dispersing phase, said liquid dispersing phase comprising a phosphoric acid-urea adduct;
- discharging a continuous flow of enriched acidic slurry from said discharge opening.

9. System for carrying out a process for recovering phosphorus from ashes coming from combustion plants that are fed with renewables and/or waste materials as solid fuel according to claim 7, comprising the following units:
- a turbo-reactor (100) comprising a cylindrical tubular body (101) having at least one inlet opening (105; 106) for said flow of ashes and for a flow of aqueous solution of sulfuric acid, and at least one discharge opening (107) for discharging a flow of acidic slurry, optionally a heating jacket (104) for bringing the inner wall of said tubular body (101) to a predetermined temperature value, and a rotor, disposed in the cylindrical tubular body and comprising a shaft (108) provided with elements (109) radially projecting therefrom; and,
- a turbo-mixer (200) comprising a cylindrical tubular body (201) having at least one inlet opening (205; 206) for a flow of acidic slurry and a flow of urea, and at least one discharge opening (207) for discharging an enriched acidic slurry, optionally a heating jacket (204) for bringing the inner wall of said tubular body (201) to a predetermined temperature value, and a rotor, disposed in the cylindrical tubular body and comprising a shaft (208) provided with elements (209) radially projecting therefrom.

10. System according to claim 9, further comprising a separation unit (400), capable of operating in continuous or discontinuous, having at least one inlet opening (405) for a flow of enriched acidic slurry comprising a dispersed phase and a dispersing phase, and at least one discharge outlet (407) for discharging a continuous or discontinuous flow of said dispersing phase.

## Patentansprüche

1. Verfahren zur Rückgewinnung von Phosphor aus Asche, vorzugsweise Bodenasche, die aus Verbrennungsanlagen stammt, die mit erneuerbaren Energien und/oder Abfallstoffen als Festbrennstoff gespeist werden, umfassend die Phasen:
a) Mischen der phosphorhaltigen Asche mit einer Schwefelsäurelösung, wodurch eine saure Aufschlämmung erhalten wird, die Phosphorsäure umfasst und einen pH-Wert zwischen 0 und 2, vorzugsweise gleich etwa 1, aufweist;
b) Mischen der sauren Aufschlämmung mit Harnstoff oder einer wässrigen Lösung davon, bis eine angereicherte saure Aufschlämmung mit einem pH-Wert zwischen 2 und 4, vorzugsweise gleich etwa 2,5, erhalten wird, wobei die angereicherte saure Aufschlämmung eine feste dispergierte Phase und eine flüssige dispergierende Phase umfasst, wobei die flüssige dispergierende Phase ein Phosphorsäure-HarnstoffAddukt umfasst,
c) Trennen der dispergierenden flüssigen Phase von der festen dispergierten Phase, wodurch die flüssige dispergierende Phase verfügbar gemacht wird.

2. Verfahren nach Anspruch 1, wobei die Asche aus Verbrennungsanlagen stammt, die mit einem festen Brennstoff gespeist werden, der aus der Gruppe bestehend aus städtischem oder industriellem Feststoffabfall, pflanzlicher Biomasse, Klärschlämmen und einer beliebigen Kombination davon ausgewählt ist.

3. Verfahren nach Anspruch 1 oder 2, wobei in der Phase a) des Mischens der Asche mit einer Schwefelsäurelösung die Schwefelsäurelösung eine Schwefelsäurekonzentration zwischen 20-60 Gew.-%, vorzugsweise 25-45 Gew.-%, stärker bevorzugt 30-40 Gew.-% aufweist.

4. Verfahren nach einem der vorhergehenden Ansprüche, wobei die Phase a) des Mischens der Asche mit einer Schwefelsäurelösung und/oder die Phase b) des Mischens der sauren Aufschlämmung mit Harnstoff bei einer Temperatur zwischen 40-150°C, vorzugsweise zwischen 45-60°C durchgeführt werden.

5. Verfahren nach einem der vorhergehenden Ansprüche, wobei in der Phase b) des Mischens der sauren Aufschlämmung mit Harnstoff die wässrige Harnstofflösung in Form einer dicken Lösung mit einer Konzentration zwischen 20 Gew.-% und 90 Gew.-%, vorzugsweise zwischen 40 Gew.-%.und 80 Gew.-% vorliegt.

6. Verfahren nach einem der vorhergehenden Ansprüche, wobei die Phase a) des Mischens der Asche mit einer Schwefelsäurelösung die folgenden Schritte umfasst:
- Bereitstellen eines Turboreaktors (100), umfassend einen zylindrischen rohrförmigen Körper (101) mit mindestens einer Einlassöffnung (105; 106) und mindestens einer Auslassöffnung (107), gegebenenfalls einem Heizmantel (104), um die Temperatur des rohrförmigen Körpers auf einen vorgegebenen Temperaturwert zu bringen, und einen Rotor, der in dem zylindrischen rohrförmigen Körper angeordnet ist und eine Welle (108) umfasst, die mit radial davon abstehenden Elementen (109) versehen ist;
- Zuführen eines kontinuierlichen Stroms der Asche und eines kontinuierlichen Stroms einer wässrigen Schwefelsäurelösung in den Turboreaktor (100), wodurch mittels des Rotors die Asche in einen kontinuierlichen Strom von Partikeln und die wässrige Schwefelsäurelösung in einen kontinuierlichen Strom feiner Tröpfchen dispergiert wird,
- Zentrifugieren der Asche und der wässrigen Schwefelsäurelösung gegen die Innenwand des Turboreaktors (100), wobei der Rotor (108) mit einer Geschwindigkeit von gleich oder größer als 100 U/min gedreht wird, unter Bildung einer dynamischen, rohrförmigen, dünnen, hochturbulenten Flüssigkeitsschicht, in der die Partikel der Asche und die Tröpfchen der wässrigen Schwefelsäurelösung durch die radial abstehenden Elemente (109) des Rotors mechanisch in engem Kontakt gehalten werden, während sie sich in wesentlichem Kontakt mit der Innenwand des Turboreaktors in Richtung der Auslassöffnung (107) fortbewegen, wodurch eine saure Aufschlämmung umfassend Phosphorsäure erhalten wird, die einen pH-Wert zwischen 0 und 2, vorzugsweise gleich 1, aufweist; und
- Auslassen eines kontinuierlichen Stroms saurer Aufschlämmung, die Phosphorsäure umfasst, aus der Auslassöffnung (107).

7. Verfahren nach einem der vorhergehenden Ansprüche, wobei die Phase b) des Mischens der sauren Aufschlämmung mit Harnstoff die folgenden Schritte umfasst:
- Bereitstellen eines Turbomischers (200), umfassend einen zylindrischen rohrförmigen Körper (201) mit mindestens einer Einlassöffnung (205; 206) und mindestens einer Auslassöffnung (207), gegebenenfalls einem Heizmantel (204), um die Temperatur des rohrförmigen Körpers auf einen vorgegebenen Temperaturwert zu bringen, und einen Rotor, der in dem zylindrischen rohrförmigen Körper angeordnet ist und eine Welle (208) umfasst, die mit radial davon abstehenden Elementen (209) versehen ist;
- Zuführen eines kontinuierlichen Stroms der sauren Aufschlämmung zusammen mit einem kontinuierlichen Strom von Harnstoff in den Turbomischer (200), wobei die saure Aufschlämmung durch den Rotor in einen Strom feiner Tröpfchen dispergiert wird,
- Zentrifugieren von Harnstoff und der sauren Aufschlämmung gegen die Innenwand des Turbomischers (200), wobei der Rotor (208) mit einer Geschwindigkeit von gleich oder größer als 100 U/min gedreht wird, unter Bildung einer dynamischen, rohrförmigen, dünnen, hochturbulenten Flüssigkeitsschicht, in der Harnstoff und die Tröpfchen der sauren Aufschlämmung durch die radial abstehenden Elemente (209) des Rotors mechanisch in engem Kontakt gehalten werden, während sie sich in wesentlichem Kontakt mit der Innenwand des Turbomischers in Richtung der Auslassöffnung (207) fortbewegen, wodurch ein kontinuierlicher Strom einer angereicherten sauren Aufschlämmung mit einem pH-Wert zwischen 2 und 4, vorzugsweise gleich etwa 2,5, erhalten wird, wobei die angereicherte saure Aufschlämmung eine feste dispergierte Phase und eine flüssige dispergierende Phase umfasst, wobei die flüssige dispergierende Phase ein Phosphorsäure-Harnstoff-Addukt umfasst,
- Auslassen eines kontinuierlichen Stroms angereicherter saurer Aufschlämmung aus der Auslassöffnung (207).

8. Verfahren nach einem der Ansprüche 1 bis 5, wobei die Phase a) des Mischens von Asche mit einer Schwefelsäurelösung die folgenden Schritte umfasst:
- Bereitstellen eines Reaktors (300), umfassend einen zylindrischen rohrförmigen Körper (301) mit einer horizontalen Achse mit einer ersten (306) und einer zweiten Öffnung (305) für den Einlass von Reagenzien, die in der Nähe eines ersten Endes des zylindrischen rohrförmigen Körpers angeordnet sind, eine dritte Öffnung (310) für den Einlass von Reagenzien, die an einer Position zwischen dem ersten Ende des zylindrischen rohrförmigen Körpers und einem zweiten gegenüberliegenden Ende des zylindrischen rohrförmigen Körpers angeordnet ist, mindestens eine Öffnung (307) zum Auslassen des Endprodukts, gegebenenfalls einen Heiz- oder Kühlmantel (304), um die Temperatur des rohrförmigen Körpers auf einen vorgegebenen Temperaturwert zu bringen, und einem Rotor, der im zylindrischen rohrförmigen Körper angeordnet ist und eine Welle (308) umfasst, die mit radial davon abstehenden Elementen (309) versehen ist;
- Zuführen eines kontinuierlichen Stroms der Asche durch die erste Einlassöffnung (306) und eines kontinuierlichen Stroms einer wässrigen Schwefelsäurelösung durch die zweite Einlassöffnung (305) in den Reaktor (300), wodurch mittels des Rotors die Asche in einen kontinuierlichen Strom von Partikeln und die wässrige Schwefelsäurelösung in einen kontinuierlichen Strom feiner Tröpfchen dispergiert wird,
- Zentrifugieren der Asche und der Schwefelsäurelösung gegen die Innenwand des Reaktors (300), wobei der Rotor (308) mit einer Geschwindigkeit von gleich oder größer als 100 U/min gedreht wird, unter Bildung einer dynamischen, rohrförmigen, dünnen, hochturbulenten Flüssigkeitsschicht, in der die Partikel der Asche und die Tröpfchen der wässrigen Schwefelsäurelösung durch die radial abstehenden Elemente (309) des Rotors mechanisch in engem Kontakt gehalten werden, während sie sich in wesentlichem Kontakt mit der Innenwand des Reaktors in Richtung der Auslassöffnung (307) fortbewegen, wodurch ein kontinuierlicher Strom einer sauren Aufschlämmung umfassend Phosphorsäure erhalten wird, die einen pH mit einem pH-Wert zwischen 0 und 2, vorzugsweise gleich 1, aufweist;
wobei die Phase b) des Mischens der sauren Aufschlämmung mit Harnstoff die folgenden Schritte umfasst:
- Zuführen eines kontinuierlichen Stroms von Harnstoff durch die dritte Einlassöffnung (310) in den Turbomischer (200) und Zentrifugieren des letzteren zusammen mit dem kontinuierlichen Strom saurer Aufschlämmung durch die Wirkung der radial abstehenden Elemente (309) des Rotors (308), indem sie in wesentlichem Kontakt mit der Innenwand des Reaktors in Richtung der Auslassöffnung fortbewegt werden, wodurch ein Strom angereicherter saurer Aufschlämmung mit einem pH-Wert zwischen 2 und 4, vorzugsweise gleich 2,5, erhalten wird, wobei die angereicherte saure Aufschlämmung eine feste dispergierte Phase und eine flüssige dispergierende Phase umfasst, wobei die flüssige dispergierende Phase ein Phosphorsäure-Harnstoff-Addukt umfasst,
- Auslassen eines kontinuierlichen Stroms angereicherter saurer Aufschlämmung aus der Auslassöffnung.

9. System zur Durchführung eines Verfahrens zur Rückgewinnung von Phosphor aus Asche aus Verbrennungsanlagen, die mit erneuerbaren Energien und/oder Abfallstoffen als Festbrennstoff gespeist werden, nach Anspruch 7, umfassend folgende Einheiten:
- einen Turboreaktor (100), umfassend einen zylindrischen rohrförmigen Körper (101) mit mindestens einer Einlassöffnung (105; 106) für den Strom von Asche und für einen Strom wässriger Schwefelsäurelösung und mindestens eine Auslassöffnung (107) zum Auslassen eines Stroms saurer Aufschlämmung, gegebenenfalls einen Heizmantel (104), um die Innenwand des rohrförmigen Körpers (101) auf einen vorgegebenen Temperaturwert zu bringen, und einen Rotor, der in dem zylindrischen rohrförmigen Körper angeordnet ist und eine Welle (108) umfasst, die mit radial davon abstehenden Elementen (109) versehen ist; und,
- einen Turbomischer (200), umfassend einen zylindrischen rohrförmigen Körper (201) mit mindestens einer Einlassöffnung (205; 206) für einen Strom saurer Aufschlämmung und einen Strom von Harnstoff und mindestens eine Auslassöffnung (207) zum Auslassen einer angereicherten sauren Aufschlämmung, gegebenenfalls einen Heizmantel (204), um die Innenwand des rohrförmigen Körpers (201) auf einen vorgegebenen Temperaturwert zu bringen, und einen Rotor, der in dem zylindrischen rohrförmigen Körper angeordnet ist und eine Welle (208) umfasst, die mit radial davon abstehenden Elementen (209) versehen ist.

10. System nach Anspruch 9, ferner umfassend eine Trenneinheit (400), die kontinuierlich oder diskontinuierlich betrieben werden kann, die mindestens eine Einlassöffnung (405) für einen Strom angereicherter saurer Aufschlämmung, umfassend eine dispergierte Phase und eine dispergierende Phase, und mindestens einen Auslass (407) zum Auslassen eines kontinuierlichen oder diskontinuierlichen Stroms der dispergierenden Phase aufweist.

## Revendications

1. Procédé de récupération de phosphore à partir de cendres, de préférence de cendres résiduelles, provenant d'usines de combustion qui sont alimentées avec des matières renouvelables et/ou de déchets comme combustible solide, comprenant les phases de :
a) mélange desdites cendres comprenant du phosphore avec une solution d'acide sulfurique, obtenant par-là une suspension acide comprenant de l'acide phosphorique et ayant une valeur de pH de 0 à 2, de préférence égale à environ 1 ;
b) mélange de ladite suspension acide avec de l'urée ou une solution aqueuse de celle-ci jusqu'à ce qu'une suspension acide enrichie avec une valeur de pH de 2 à 4, de préférence égale à environ 2,5, soit obtenue, dans lequel ladite suspension acide enrichie comprend une phase dispersée solide et une phase de dispersion liquide, ladite phase de dispersion liquide comprenant un produit d'addition d'acide phosphorique-urée ;
c) séparation de ladite phase liquide de dispersion de ladite phase dispersée solide, rendant par-là ladite phase de dispersion liquide disponible.

2. Procédé selon la revendication 1, dans lequel lesdites cendres proviennent d'usines de combustion qui sont alimentées avec un combustible solide choisi dans le groupe consistant en déchets solides urbains ou industriels, biomasse végétale, boues d'égouts et toute combinaison de ceux-ci.

3. Procédé selon la revendication 1 ou 2, dans lequel dans ladite phase a) de mélange desdites cendres avec une solution d'acide sulfurique, la solution d'acide sulfurique présente une concentration en acide sulfurique de 20-60 % en masse, de préférence 25-45 % en masse, encore mieux 30-40 % en masse.

4. Procédé selon l'une quelconque des revendications précédentes, dans lequel ladite phase a) de mélange desdites cendres avec une solution d'acide sulfurique et/ou ladite phase b) de mélange de ladite suspension acide avec de l'urée sont réalisées à une température de 40-150°C, de préférence 45-60°C.

5. Procédé selon l'une quelconque des revendications précédentes, dans lequel dans ladite phase b) de mélange de ladite suspension acide avec de l'urée, ladite solution aqueuse d'urée est dans la forme d'une solution épaisse avec une concentration de 20 % à 90 % en masse, de préférence de 40 % à 80 % en masse.

6. Procédé selon l'une quelconque des revendications précédentes, dans lequel ladite phase a) de mélange desdites cendres avec une solution d'acide sulfurique comprend les étapes suivantes :
- fourniture d'un turbo-réacteur (100) comprenant un corps tubulaire cylindrique (101) ayant au moins une ouverture d'entrée (105 ; 106) et au moins une ouverture de décharge (107), éventuellement une enveloppe chauffante (104) pour amener la température du corps tubulaire à une valeur de température prédéterminée, et un rotor, disposé dans le corps tubulaire cylindrique et comprenant un arbre (108) muni d'éléments (109) faisant radialement saillie à partir de celui-ci ;
- introduction d'un écoulement continu desdites cendres et d'un écoulement continu de solution aqueuse d'acide sulfurique dans ledit turbo-réacteur (100), dispersant par-là, au moyen dudit rotor, lesdites cendres en un écoulement continu de particules et ladite solution aqueuse d'acide sulfurique en un écoulement continu de fines gouttelettes ;
- centrifugation desdites cendres et de la solution aqueuse d'acide sulfurique contre la paroi interne du turbo-réacteur (100), ledit rotor (108) étant mis en rotation à une vitesse supérieure ou égale à 100 tr/min, avec formation d'une couche fluide hautement turbulente, mince, tubulaire, dynamique, dans laquelle les particules desdites cendres et les gouttelettes de ladite solution aqueuse d'acide sulfurique sont mécaniquement maintenues en contact intime par les éléments faisant radialement saillie (109) dudit rotor, alors qu'elles avancent en contact substantiel avec ladite paroi interne du turbo-réacteur vers l'ouverture de décharge (107), obtenant par-là une suspension acide comprenant de l'acide phosphorique, ayant une valeur de pH de 0 à 2, de préférence égale à 1 ; et,
- décharge d'un écoulement continu de suspension acide comprenant de l'acide phosphorique à partir de ladite ouverture de décharge (107).

7. Procédé selon l'une quelconque des revendications précédentes, dans lequel ladite phase b) de mélange de ladite suspension acide avec de l'urée comprend les étapes suivantes :
- fourniture d'un turbo-mélangeur (200) comprenant un corps tubulaire cylindrique (201) ayant au moins une ouverture d'entrée (205 ; 206) et au moins une ouverture de décharge (207), éventuellement une enveloppe chauffante (204) pour amener la température dudit corps tubulaire à une valeur de température prédéterminée, et un rotor, disposé dans le corps tubulaire cylindrique et comprenant un arbre (208) muni d'éléments (209) faisant radialement saillie à partir de celui-ci ;
- introduction d'un écoulement continu de ladite suspension acide avec un écoulement continu d'urée dans ledit turbo-mélangeur (200), la suspension acide étant dispersée par ledit rotor en un écoulement de fines gouttelettes ;
- centrifugation d'urée et de ladite suspension acide contre la paroi interne dudit turbo-mélangeur (200), ledit rotor (208) étant mis en rotation à une vitesse supérieure ou égale à 100 tr/min, avec formation d'une couche fluide hautement turbulente, mince, tubulaire, dynamique, dans laquelle l'urée et les gouttelettes de suspension acide sont mécaniquement maintenues en contact intime par les éléments faisant radialement saillie (209) dudit rotor, alors qu'elles avancent en contact substantiel avec ladite paroi interne du turbo-mélangeur vers l'ouverture de décharge (207), obtenant par-là un écoulement continu d'une suspension acide enrichie ayant une valeur de pH de 2 à 4, de préférence égale à environ 2,5, dans lequel ladite suspension acide enrichie comprend une phase dispersée solide et une phase de dispersion liquide, ladite phase de dispersion liquide comprenant un produit d'addition d'acide phosphorique-urée ;
- décharge d'un écoulement continu de suspension acide enrichie de ladite ouverture de décharge (207).

8. Procédé selon l'une quelconque des revendications 1 à 5, dans lequel
ladite phase a) de mélange de cendres avec une solution d'acide sulfurique comprend les étapes suivantes :
- fourniture d'un réacteur (300) comprenant un corps tubulaire cylindrique (301) avec un axe horizontal ayant une première (306) et une seconde ouverture (305) pour l'entrée de réactifs, disposées à proximité d'une première extrémité dudit corps tubulaire cylindrique, une troisième ouverture (310) pour l'entrée de réactifs, disposée dans une position intercalée entre ladite première extrémité dudit corps tubulaire cylindrique et une seconde extrémité opposée dudit corps tubulaire cylindrique, au moins une ouverture (307) pour décharger le produit final, éventuellement une enveloppe chauffante ou refroidissante (304) pour amener la température du corps tubulaire à une valeur de température prédéterminée, et un rotor, disposé dans le corps tubulaire cylindrique et comprenant un arbre (308) muni d'éléments (309) faisant radialement saillie à partir de celui-ci ;
- introduction d'un écoulement continu desdites cendres, à travers ladite première ouverture d'entrée (306), et d'un écoulement continu d'une solution aqueuse d'acide sulfurique, à travers ladite seconde ouverture d'entrée (305), dans ledit réacteur (300), dispersant par-là, au moyen dudit rotor, lesdites cendres en un écoulement continu de particules et ladite solution aqueuse d'acide sulfurique en un écoulement continu de fines gouttelettes ;
- centrifugation desdites cendres et de la solution d'acide sulfurique contre la paroi interne du réacteur (300), ledit rotor (308) étant mis en rotation à une vitesse supérieure ou égale à 100 tr/min, avec formation d'une couche fluide hautement turbulente, mince, tubulaire, dynamique, dans lequel les particules desdites cendres et les gouttelettes de ladite solution aqueuse d'acide sulfurique sont mécaniquement maintenues en contact intime par les éléments faisant radialement saillie (309) dudit rotor, alors qu'elles avancent en contact substantiel avec ladite paroi interne du réacteur vers l'ouverture de décharge (307), obtenant par-là un écoulement continu de suspension acide comprenant de l'acide phosphorique, ayant un pH avec une valeur de pH de 0 à 2, de préférence égale à 1 ;
ladite phase b) de mélange de suspension acide avec de l'urée comprend les étapes suivantes :
- introduction d'un écoulement continu d'urée à travers ladite troisième ouverture d'entrée (310) dans ledit turbo-mélangeur (200), et centrifugation de ce dernier avec ledit écoulement continu de suspension acide par l'action desdits éléments faisant radialement saillie (309) dudit rotor (308), en les avançant en contact substantiel avec ladite paroi interne du réacteur vers l'ouverture de décharge, obtenant par-là un écoulement de suspension acide enrichie ayant une valeur de pH de 2 à 4, de préférence égale à 2,5, dans lequel ladite suspension acide enrichie comprend une phase dispersée solide et une phase de dispersion liquide, ladite phase de dispersion liquide comprenant un produit d'addition d'acide phosphorique-urée ;
- décharge d'un écoulement continu de suspension acide enrichie à partir de ladite ouverture de décharge.

9. Système pour la réalisation d'un procédé pour la récupération de phosphore à partir de cendres provenant d'usines de combustion qui sont alimentées avec des matières renouvelables et/ou de déchets comme combustible solide selon la revendication 7, comprenant les unités suivantes :
- un turbo-réacteur (100) comprenant un corps tubulaire cylindrique (101) ayant au moins une ouverture d'entrée (105 ; 106) pour ledit écoulement de cendres et pour un écoulement de solution aqueuse d'acide sulfurique, et au moins une ouverture de décharge (107) pour décharger un écoulement de suspension acide, éventuellement une enveloppe chauffante (104) pour amener la paroi interne dudit corps tubulaire (101) à une valeur de température prédéterminée, et un rotor, disposé dans le corps tubulaire cylindrique et comprenant un arbre (108) muni d'éléments (109) faisant radialement saillie à partir de celui-ci ; et,
- un turbo-mélangeur (200) comprenant un corps tubulaire cylindrique (201) ayant au moins une ouverture d'entrée (205 ; 206) pour un écoulement de suspension acide et un écoulement d'urée, et au moins une ouverture de décharge (207) pour décharger une suspension acide enrichie, éventuellement une enveloppe chauffante (204) pour amener la paroi interne dudit corps tubulaire (201) à une valeur de température prédéterminée, et un rotor, disposé dans le corps tubulaire cylindrique et comprenant un arbre (208) muni d'éléments (209) faisant radialement saillie à partir de celui-ci.

10. Système selon la revendication 9, comprenant de plus une unité de séparation (400), capable de fonctionner en continu ou discontinu, ayant au moins une ouverture d'entrée (405) pour un écoulement de suspension acide enrichi comprenant une phase dispersée et une phase de dispersion, et au moins une sortie de décharge (407) pour décharger un écoulement continu ou discontinu de ladite phase de dispersion.
